# EUROPEAN PATENT APPLICATION

(11) **EP 2 083 056 A1**
(43) Date of publication of application: **29.07.2009**
(21) Application number: 07829306.5
(22) Date of filing: 05.10.2007
(51) Int. Cl.: C09D 175/04, C09D 7/12, C09D 127/12

(54) **COMPOSITION FOR TWO-COMPONENT FLUORINE COATING MATERIAL**

(30) Priority: 05.10.2006 JP 2006274389
(71) Applicant: Mitsui Chemicals Polyurethanes, Inc., Tokyo 105-7117 (JP); Asahi Glass Company, Limited, Chiyoda-ku Tokyo 100-8405 (JP)
(72) Inventor: TOMIOKA, Masahiro, Sodegaura-shi Chiba 299-0265 (JP); KASAHARA, Kiyoshi, Ichihara-shi Chiba 290-0058 (JP); NISHIMURA, Mitsuhiro, Sodegaura-shi Chiba 299-0265 (JP)
(74) Representative: HOFFMANN EITLE
(86) International application number: PCT/JP2007/069568
(87) International publication number: WO 2008/041766

(57) **Abstract**

A coating composition is prepared by blending a polyisocyanate curing agent, a weak solvent-soluble fluorine-containing copolymer and a weak solvent. The polyisocyanate curing agent is obtained by a reaction between an alicylic polyisocyanate and a monoalcohol having 10-50 carbon atoms. The weak solvent-soluble fluorine-containing copolymer is a copolymer obtained from a fluoroolefin and a double bond-containing monomer copolymerizable with the fluoroolefin, and has afluorine content derived from fluoroolefin of not less than 10% by mass. In this connection, 5-30% by mole of the double bond-containing monomer contains a hydroxyl group, while 10-50% by mole of the double bond-containing monomer contains a branched alkyl group having 3 or more carbon atoms.

## Description

### TECHNICAL FIELD

The present invention relates to coating compositions, and more specifically to a coating composition containing a polyisocyanate curing agent and a fluorine-containing copolymer.

### BACKGROUND ART

Conventionally, fluororesins are known as coating resins having excellent weather resistance, and are used in the form of, for example, heavy duty protective topcoats, cement-based topcoats, or the like.
When a strong solvent (strong polar solvent) such as toluene or xylene is contained in those fluororesin-containing coating resins, direct application of the coating resin onto an old coating film made of synthetic resin ready-mixed paint, chlorinated rubber-type coating material, lacquers, or the like, which has been aged, for the purpose of repair, etc. may disadvantageously cause film shrinkage or blistering, or deteriorate adhesion.

Further, when a coating resin containing such fluororesin is combined with a polyisocyanate curing agent in order to improve hardness and stain resistance, and is used as a two-component curing type coating material, the coating resin is less likely to dissolve in a weak solvent (weak polar solvent) because a hydroxyl group for allowing to react with an isocyanate group is introduced therein, so that a strong solvent is contained in the coating resin. However, the coating resin containing the strong solvent may damage the old coating film in the repair process as described above.

Therefore, as a fluororesin which is soluble in weak solvents and can be used as a coating resin for two-component curing type coating material, there has been proposed, for example, a weak solvent-soluble fluorine-containing copolymer, which is a copolymer of a fluoroolefin and a double bond-containing monomer copolymerizable with the fluoroolefin, and having a fluorine content derived from the fluoroolefin of 10% by mass or more, in which 5 to 30% by mol of the double bond-containing monomer contains a hydroxyl group while 10 to 50% by mol of the double bond-containing monomer contains a branched alkyl group having 3 or more carbon atoms (cf. for example, the following Patent Document 1).

In addition, as for the polyisocyanate curing agent, for example, a polyisocyanate having an isocyanurate ring obtained by allowing a diisocyanate compound to react with a monoalcohol having 10 to 50 carbon atoms in the presence of an isocyanurate-forming catalyst and then removing unreacted diisocyanate compound, has been proposed as a polyisocyanate curing agent which is dissolved in a nonpolar solvent and has excellent compatibility with a fluororesin (c.f., the following Patent Document 2).
Patent Document 1: Japanese Unexamined Patent Publication No. 2004-277716
Patent Document 2: Japanese Unexamined Patent Publication No. 2-250872

### DISCLOSURE OF THE INVENTION

### PROBLEMS TO BE SOLVED

However, in the case where the polyisocyanate described in the above Patent Document 2 is combined with the fluorine-containing copolymer described in the above Patent Document 1 to be used as a two-component curing type coating material, there has been caused a problem such that when the fluorine-containing copolymer and the polyisocyanate are dissolved in a weak solvent, they are once completely dissolved therein at the beginning, and thereafter they are precipitated again as the amount of weak solvent increases.
It is an object of the present invention to provide a coasting composition having good solubility in weak solvents and excellent in coating properties.

### MEANS FOR SOLVING THE PROBLEM

To achieve the above object, the coating composition of the present invention contains at least a polyisocyanate curing agent obtained by a reaction between an alicyclic polyisocyanate and a monoalcohol having at least 10 to 50 carbon atoms; a weak solvent-soluble fluorine-containing copolymer being a copolymer of a fluoroolefin and a double bond-containing monomer copolymerizable with the fluoroolefin, and having a fluorine content derived from the fluoroolefin of 10% by mass or more, in which 5 to 30% by mol of the double bond-containing monomer contains a hydroxyl group while 10 to 50% by mol of the double bond-containing monomer contains a branched alkyl group having 3 or more carbon atoms; and a weak solvent.

In the coating composition of the present invention, it is preferable that the polyisocyanate curing agent has an allophanate/isocyanurate composition ratio in a range of 50/50 to 100/0.
In the coating composition of the present invention, it is preferable that the dilution property of the polyisocyanate curing agent in a mineral spirit is 150% or more.
In.the coating composition of the present invention, it is preferable that the alicyclic polyisocyanate is 1,3-bis(isocyanatomethyl) cyclohexane.

### EFFECT OF THE INVENTION

The coating composition of the present invention is excellent in solubility in weak solvents, and has also excellent coating properties, such as weather resistance, hardness, and shock resistance. Moreover, the coating composition has excellent workability such as pot life. Accordingly, with the coating composition, a coating film having excellent coating properties can be formed on various articles to be coated which are susceptible to damage by a strong solvent, without damaging them.

### EMBODIMENT OF THE INVENTION

The coating composition of the present invention contains a polyisocyanate curing agent, a fluorine-containing copolymer, and a weak solvent.
In the present invention, the polyisocyanate curing agent can be obtained by a reaction between an alicyclic polyisocyanate and a monoalcohol having at least 10 to 50 carbon atoms.
Examples of the alicyclic polyisocyanate include alicyclic diisocyanates such as 1,3-or1,4-bis(isocyanatomethyl)cyclohexane or mixtures thereof (H₆XDI), 3-isocyanatomethyl-3,5,5-trimethylcyclohexyl isocyanate (IPDI: isophorone diisocyanate), 4,4'-, 2,4'- or 2,2'-dicyclohexylmethane diisocyanate or mixtures thereof (H₁₂MDI), bis(isocyanatomethyl)norbornane (NBDI), hydrogenated naphthalene diisocyanate, 1,3- or 1,4-diisocyanato cyclohexane, 1-methyl-2,4- or 2,6-diisocyanato cyclohexane, and isopropylidene-bis(4-cyclohexyl) isocyanate. Among them, H₆XDI, IPDI, H₁₂MDI, and NBDI are preferable, or H₆XDI is more preferable. These alicyclic polyisocyanates can be used alone or in combination of two or more kinds.

Examples of the monoalcohol having 10 to 50 carbon atoms include n-decanol, n-undecanol, n-dodecanol, butyl hexanol, trimethyl nonyl alcohol, n-tridecanol, n-tetradecanol, 5-ethyl-2-nonanol, n-pentadecanol, n-hexadecanol, 2-hexyldecanol, n-heptadecanol, 3,9-diethyl-6-decanol, n-octadecanol, 2-isoheptylisoundecanol, n-nonadecanol, eicosanol, 2-octyldodecanol, ceryl alcohol, 2-decyltetradecanol, 2-cetylstearyl alcohol, and melissyl alcohol. Among them, monoalcohols having 10 to 30 carbon atoms are preferable, or monoalcohols having 10 to 16 carbon atoms are more preferable. More specifically, n-decanol (n-decyl alcohol), n-dodecanol (n-dodecyl alcohol), or n-hexadecanol (n-hexadecyl alcohol) may be used. These monoalcohols can be used alone or in combination of two or more kinds.

As long as each of these monoalcohols has one hydroxyl group in the molecule, the other molecular structures thereof are not particularly limited unless the excellent effect of the present invention is inhibited, and for example, the monoalcohols can also have an ester group, an ether group, a cyclohexane ring, an aromatic ring, or the like in the molecule.
The alicyclic polyisocyanate and the monoalcohol having 10 to 50 carbon atoms are made to react with each other so that the obtained polyisocyanate curing agent has an allophanate/isocyanurate composition ratio in the range of 50/50 to 100/0 (mass ratio), or preferably 60/40 to 95/5 (mass ratio). That is, they are made to react so that the mass of the allophanate composition (allophanate of the alicyclic polyisocyanate) may be the same or more than that of the isocyanurate composition (isocyanurate of the alicyclic polyisocyanate).

The allophanate/isocyanurate composition ratio is a mass ratio between the allophanate of the alicyclic polyisocyanate and the isocyanurate of the alicyclic polyisocyanate, in the obtained polyisocyanate curing agent. Such composition ratio can be calculated, for example, by measuring the molecular weight distribution of the polyisocyanate curing agent using a gel permeation chromatograph (GPC) equipped with a differential refractive index detector (RID), and determining a ratio (area ratio) between a peak corresponding to the allophanate of the alicyclic polyisocyanate and a peak corresponding to the isocyanurate of the alicyclic polyisocyanate, from the obtained chromatogram (chart). For convenience, in the chromatogram measured by GPC, peaks other than the peak corresponding to the allophanate of the alicyclic polyisocyanate are regarded as the peak corresponding to the isocyanurate of the alicyclic polyisocyanate (however, the peak corresponding to unreacted alicyclic polyisocyanate, if remains, is excluded.), and the area ratio of the peak corresponding to the allophanate of the alicyclic polyisocyanate to all the peaks can be calculated as an allophanate composition ratio (the remainder thereof is an isocyanurate composition ratio).

In the obtained polyisocyanate curing agent, the allophanate of the alicyclic polyisocyanate can improve solubility (dilution) in weak solvents while the isocyanurate of the alicyclic polyisocyanate can improve coating properties. Therefore, in the obtained polyisocyanate curing agent, if the allophanate/isocyanurate composition ratio is within the above range, both the solubility in weak solvents and the coating properties can be satisfied.

In the obtained polyisocyanate curing agent, the alicyclic polyisocyanate and the monoalcohol having 10 to 50 carbon atoms are made to react with each other under specific reaction conditions in the presence of a specific reaction catalyst so that the allophanate/isocyanurate composition ratio falls in the above range.
As the reaction catalyst, catalysts having easy reaction control, little coloring of the reaction product, and capable of reducing the generation of dimers having poor thermal stability, are used, and examples of the reaction catalyst include a hydroxide or organic weak acid salt of a tetraalkylammonium such as tetramethylammonium and tetraethylammonium; a hydroxide or organic weak acid salt of a trialkylhydroxyalkylammonium such as trimethylhydroxypropylammonium and triethylhydroxypropylammonium; an alkali metal salt of an alkylcarboxylic acid such as acetic acid, caproic acid, octylic acid, and myristic acid; a metal salt such as a tin salt, zinc salt, or lead salt of the above-mentioned alkylcarboxylic acid; a metal chelate compound of a β-diketone such as aluminium acetylacetone and lithium acetylacetone; a Friedel-Crafts catalyst such as aluminium chloride and boron trifluoride; various organic metallic compounds such as titanium tetrabutylate and tributyl antimony oxide; and an aminosilyl group-containing compound such as hexamethylsilazane. Among them, quaternary ammonium compounds such as a hydroxide or organic weak acid salt of a tetraalkylammonium, and a hydroxide or organic weak acid salt of a trialkylhydroxyalkylammonium are preferable. These reaction catalysts can be used alone or in combination of two or more kinds.

The catalyst is added in an amount of, for example, 0.1 parts by mass or less, or preferably 0.01 parts by mass or less, per 100 parts by mass of the alicyclic polyisocyanate. If possible, the catalyst is desirably added in a small amount in order to prevent high polymerization of polyurethane compounds.
As the reaction conditions, for example, the reaction is conducted under an atmosphere of inert gas such as nitrogen gas, and normal pressure (atmospheric pressure); the reaction temperature is, for example, in excess of 80°C, or preferably 90 to 100°C; and the reaction time is in the range of, for example, 0.1 to 2.0 hours, or preferably 0.2 to 0.5 hours.

In this reaction, the alicyclic polyisocyanate and the monoalcohol having 10 to 50 carbon atoms are blended at an equivalent ratio (NCO/OH) of, for example, 5 to 50, or preferably 15 to 30 of the isocyanate group of the alicyclic polyisocyanate to the hydroxyl group of the monoalcohol having 10 to 50 carbon atoms.
In this reaction, if necessary, a known reaction solvent may be blended, and moreover, a known catalyst deactivator can also be added at arbitrary timing.

The reaction is described in more specific details: For example, a reaction vessel in which the atmosphere has been replaced by inert gas is charged with an alicyclic polyisocyanate and a monoalcohol having 10 to 50 carbon atoms in the above blending proportion. The mixture is then allowed to react therein at a temperature, for example, in excess of 80°C, or preferably 85 to 90°C for 2 to 6 hours. Thereafter, a reaction catalyst is added thereto, and further allowed to react at a temperature of, for example, 70 to 90°C, or preferably 75 to 85°C for 1 to 2 hours. Subsequently, a catalyst deactivator is added to stop the reaction.

After completion of the reaction, if necessary, unreacted alicyclic polyisocyanate is removed by a known method such as distillation.
In addition, after the reaction is completed, the obtained polyisocyanate curing agent can be allowed to react with a polyol having a number average molecular weight of, for example, 400 to 2000, or preferably 700 to 1000, whereby the obtained polyisocyanate curing agent can be modified with the polyol.

Examples of the polyol include polyoxyalkylene polyols such as polyoxyethylene diol, polyoxyethylene triol, polyoxypropylene diol, polyoxypropylene triol, polyoxyethylene oxypropylene diol, and polyoxyethylene oxypropylene triol. These polyols can be used alone or in combination of two or more kinds.

The blending amount of the polyol is in the range of, for example, 1 to 20 parts by mass, or preferably 5 to 15 parts by mass, per 100 parts by mass of the polyisocyanate curing agent.
The polyisocyanate curing agent and the polyol can be made to react with each other under any known reaction conditions without particular limitation.
As described above, the polyisocyanate curing agent thus obtained has an allophanate/isocyanurate composition ratio in the range of preferably 50/50 to 100/0 (mass ratio), or even 60/40 to 95/5 (mass ratio); a conversion ratio (reaction ratio) of, for example, 30 to 50%, or even 35 to 45%; an isocyanate content of, for example, 10 to 20%, or even 12 to 18%; a viscosity (measurement viscosity by a BL type viscometer) of, for example, 1000 to 100000 mPa·s, or even 4000 to 40000 mPa·s; and a content of the unreacted alicyclic polyisocyanate of, for example, 1.0% by mass or less, or even 0.5% by mass or less.

The dilution property of the obtained polyisocyanate curing agent in a mineral spirit is preferably 150% or more, or even 200% or more, and usually 500% or less.
The dilution property is an index (dilution ratio) indicating the extent to which a weak solvent can dilute a polyisocyanate curing agent, and for example, at 0°C, a mineral spirit is added to X g of a polyisocyanate curing agent until the polyisocyanate curing agent becomes cloudy, and using an amount Y g of the mineral spirit blended at the time when the polyisocyanate curing agent turns cloudy, the dilution property is represented by the following equation:

Dilution Property (%) = Y g/X g x 100
When the dilution property is 150% or more, the solubility of the polyisocyanate curing agent in the weak solvent is excellent, and in-use, the polyisocyanate curing agent can be sufficiently dissolved in the weak solvent.
In the present invention, the fluorine-containing copolymer is a weak solvent-soluble fluorine-containing copolymer which is a copolymer of a fluoroolefin and a double bond-containing monomer copolymerizable with the fluoroolefin, having a fluorine content derived from the fluoroolefin of 10% by mass or more, in which 5 to 30% by mol of the double bond-containing monomer contains a hydroxyl group while 10 to 50% by mol of the double bond-containing monomer contains a branched alkyl group having 3 or more carbon atoms. Examples thereof include the fluorine-containing copolymer for coating material described in the above Patent Document 1.

Examples of the fluoroolefin include preferably a fluoroolefin having 2 or more fluorines added, or even a fluoroolefin having 3 to 4 fluorines added, from the viewpoint of weather resistance. Specifically, tetrafluoroethylene, chlorotrifluoroethylene, vinylidene fluoride, or hexafluoropropylene may be used, or tetrafluoroethylene or chlorotrifluoroethylene is preferable. These fluoroolefins can be used alone or in combination of two or more kinds.

The double bond-containing monomer is a vinyl-based monomer having a carbon-carbon double bond represented by CH₂=CH-, which is copolymerizable with fluoroolefin, but not a fluoroolefin. Examples of the vinyl-based monomer include alkyl vinyl ether and alkyl vinyl ester, which contain a linear, branched, or cyclic alkyl group.
The double bond-containing monomer includes both a double bond-containing monomer containing a hydroxyl group (hereinafter referred to as a hydroxyl group-containing monomer) and a double bond-containing monomer containing a branched alkyl group having 3 or more carbon atoms (hereinafter referred to as a branched alkyl group-containing monomer). The hydroxyl group-containing monomer may contain the branched alkyl group having 3 or more carbon atoms, and vice versa.

In this connection, 5 to 30% by mol of the double bond-containing monomer contains a hydroxyl group. When the content of the hydroxyl group-containing monomer is 5% by mol or more, a coating film having high hardness can be obtained, while when the content thereof is 30% by mol or less, sufficient solubility in weak solvents can be maintained.
The number of carbon atoms in the hydroxyl group-containing monomer is not particularly limited, and is in the range of preferably 2 to 10, more preferably 2 to 6, or even more preferably 2 to 4.

Examples of the hydroxyl group-containing monomer include hydroxyalkyl vinyl ethers such as 4-hydroxybutyl vinyl ether (HBVE), 2-hydroxyethyl vinyl ether (HEVE), and cyclohexane dimethanol monovinyl ether; hydroxyalkyl allyl ethers such as hydroxyethyl allyl ether and cyclohexane dimethanol monoallyl ether; and (meth)acrylic acid hydroxy alkyl esters such as hydroxyethyl (meth)acrylate.

Among them, hydroxyalkyl vinyl ethers are preferable from the viewpoints of excellent copolymerization property and improvement in weather resistance of the coating film to be formed. In particular, hydroxyalkyl vinyl ether having 2 to 4 carbon atoms is preferable, or HBVE is more preferable, from the viewpoint of excellent solubility in weak solvents. These hydroxyl group-containing monomers can be used alone or in combination of two or more kinds.

Further, 10 to 50% by mol of the double bond-containing monomer contains a branched alkyl group having 3 or more carbon atoms. When the content of the branched alkyl group-containing monomer is 10 to 50% by mol, even if the hydroxyl group-containing monomer is blended in the above proportion, the solubility in weak solvents can be secured.
The number of carbon atoms in the branched alkyl group of the branched alkyl group-containing monomer is not particularly limited as long as it is 3 or more, and the branched alkyl group preferably has 4 to 15 carbon atoms, or more preferably 4 to 10 carbon atoms.

Examples of the branched alkyl group-containing monomer include vinyl ethers, allyl ethers, or (meth)acrylic acid esters containing a branched alkyl group. Examples of the branched alkyl group include isopropyl group, isobutyl group, sec-butyl group, tert-butyl group, 2-ethylhexyl group, and 2-methylhexyl group. As the branched alkyl group-containing monomer, vinyl ethers such as 2-ethylhexyl vinyl ether (2-EHVE) and tert-butyl vinyl ether (t-BuVE) are preferable, or 2-EHVE is more preferable, from the viewpoint of excellent copolymerization property. These branched alkyl group-containing monomers can be used alone or in combination of two or more kinds.

Further, in the present invention, an other double bond-containing monomer except the hydroxyl group-containing monomer and the branched alkyl group-containing monomer can also be contained as the double bond-containing monomer without inhibiting the excellent effect of the present invention.
As the other double bond-containing monomer, a monomer containing an alkyl group is preferable, and examples of the alkyl group include a linear, branched, or cyclic alkyl group. The number of carbon atoms in the alkyl group is preferably 2 to 8, or more preferably 2 to 6. In particular, when the double bond-containing monomer containing a cyclic alkyl group is blended, the glass transition temperature (Tg) of the fluorine-containing copolymer can be increased, and the hardness of the coating film can be further improved.

Examples of the double bond-containing monomer containing a cyclic alkyl group include cyclic alkyl vinyl ethers such as cyclohexyl vinyl ether and cyclohexylmethyl vinyl ether; and (meth)acrylic acid cyclic alkyl esters such as cyclohexyl (meth)acrylate and 3,3,5-trimethylcyclohexyl (meth)acrylate. These other double bond-containing monomers can be used alone or in combination of two or more kinds. The proportion of the other double bond-containing monomer is preferably 70% by mol or less, or more preferably 30 to 60% by mol of the total amount of the double bond-containing monomer.

In the present invention, with respect to a proportion of a polymerization unit derived from the fluoroolefin and a polymerization unit derived from the double bond-containing monomer, the proportion of the polymerization unit derived from the fluoroolefin is in the range of preferably 30 to 70% by mol, or more preferably 40 to 60% by mol while the proportion of the polymerization unit derived from the double bond-containing monomer is in the range of preferably 70 to 30% by mol, or more preferably 60 to 40% by mol. When the polymerization unit derived from the fluoroolefin is 70% by mol or less, the solubility of the fluorine-containing copolymer in weak solvents is sufficient, while when it is 30% by mol or more, satisfactory weather resistance can be secured. In the present invention, the fluorine-containing copolymer is preferably dissolved completely in the weak solvent having the amount blended with the coating composition, but may be partly insoluble in the weak solvent.

The fluorine-containing copolymer can be obtained by blending a fluoroolefin and a double bond-containing monomer containing a hydroxyl group-containing monomer and a branched alkyl group-containing monomer, and adding a polymerization initiator or a polymerization initiation source such as an ionizing radiation thereto in the presence or absence of a polymerization medium to copolymerize the mixture. This copolymerization reaction is a known radical copolymerization reaction, and the reaction conditions such as reaction temperature, reaction time, and reaction pressure, are appropriately selected.

The blending proportion of the fluoroolefin and the double bond-containing monomer in the copolymerization reaction is the same as the proportion of the polymerization unit derived from the fluoroolefin and the polymerization unit derived from the double bond-containing monomer in the fluorine-containing copolymer.
Examples of the polymerization medium include ketones such as methyl ethyl ketone and methyl isobutyl ketone; esters such as ethyl acetate and n-butyl acetate; aromatic hydrocarbons such as xylene and toluene; aliphatic hydrocarbons such as cyclohexanone, solvent naphtha, mineral turpentine, mineral spirit, and petroleum naphtha; 3-ethyl ethoxypropionate, methyl amyl ketone, tert-butyl acetate, 4-chlorobenzotrifluoride, benzotrifluoride, monochlorotoluene, and 3,4-dichlorobenzotrifluoride.

Examples of the polymerization initiator include azo-based initiators such as 2,2'-azobis(isobutyronitrile), 2,2'-azobis cyclohexanecarbonatenitrile, 2,2'-azobis (2,4-dimethylvaleronitrile), and 2,2'-azobis (2-methylbutyronitrile). Further examples thereof include peroxide-based initiators, for example, ketone peroxides such as cyclohexanon peroxide; hydroperoxides such as tert-butyl hydroperoxide; diacyl peroxides such as benzoyl peroxide; dialkyl peroxides such as di-tert-butyl peroxide; peroxy ketals such as 2,2-di-(tert-butylperoxy)butane; alkyl peresters such as tert-butylperoxy pivalate; and percarbonates such as diisopropylperoxy dicarbonate.

The fluorine-containing copolymer contains 10% by mass or more, or preferably 20 to 30% by mass of fluorine based on the fluoroolefin, of the total amount of the fluorine-containing copolymer. When the content of the fluorine is 10% by mass or more, weather resistance of the coating film can be improved.
The fluorine-containing copolymer contains a hydroxyl group for allowing to react with an isocyanate group of the polyisocyanate curing agent, and has a hydroxyl value (hereinafter referred to as OHV) of preferably 30 to 55 mg KOH/g, or more preferably 35 to 50 mg KOH/g. When the fluorine-containing copolymer has an OHV of 30 mg KOH/g or more, the hardness of the coating film can be improved. On the other hand, having an OHV of 55 mg KOH/g or less, the fluorine-containing copolymer can be sufficiently dissolved in the weak solvent.

The fluorine-containing copolymer has a number average molecular weight (Mn) determined by GPC of preferably 5000 to 10000 on the basis of a calibration curve of standard polystyrene. The fluorine-containing copolymer having an Mn of 5000 or more is excellent in weather resistance, while that having an Mn of 10000 or less has good solubility in weak solvents.
The fluorine-containing copolymer also has a glass transition point (hereinafter referred to as Tg) of preferably 25°C or more, or more preferably 30 to 40°C. The fluorine-containing copolymer having a Tg of 25°C or more can increase the hardness of the coating film.

In the present invention, the fluorine-containing copolymer preferably contains a carboxyl group. The containing of the carboxyl group can improve the dispersibility of a pigment. The fluorine-containing copolymer has an acid value (hereinafter referred to as AV) of 0.5 to 5 mg KOH/g, or preferably 2 to 5 mg KOH/g.
The carboxyl group can be introduced, for example, by allowing a polycarboxylic acid or an anhydride thereof to react with the hydroxyl group contained in the fluorine-containing copolymer after the copolymerization reaction of the fluoroolefin and the double bond-containing monomer. Alternatively, in the copolymerization reaction, the double bond-containing monomer having a carboxyl group is included together with the hydroxyl group-containing monomer and the branched alkyl group-containing monomer as a double bond-containing monomer, to thereby allow direct copolymerization. Examples of the polycarboxylic acid or its anhydride include maleic anhydride. Examples of the double bond-containing monomer having a carboxyl group include acrylic acid, and methacrylic acid.

In the present invention, the weak solvent is a weak polar solvent, i.e., a poor solvent for a solute having a polarity. Specific examples thereof include Class-3 organic solvents among the organic solvents classified by Occupational Safety and Health Act, and correspond to any of the organic solvents listed in a) to c) below:
a) Gasoline, coal-tar naphtha (including solvent naphtha), petroleum ether, petroleum naphtha, petroleum benzine, turpentine oil, and mineral spirit (including mineral thinner, petroleum spirit, white spirit, and mineral turpentine)
b) Mixtures containing only the organic solvents listed in a)
c) Mixtures of organic solvents listed in a) and organic solvents other than a), containing the organic solvents of a) at more than 5% by mass

In the present invention, using any of these Class-3 organic solvents as the weak solvent, a Class-2 organic solvent, which corresponds to a strong solvent, is contained in an amount not exceeding 5% by mass of all the solvents, which can prevent damage to an article to be coated.
As the weak solvent, a mineral spirit is preferable from the viewpoint of having a flash point of room temperature or higher.

The coating composition of the present invention can be obtained by blending a polyisocyanate curing agent, a fluorine-containing copolymer, and a weak solvent.
In the coating composition of the present invention, the blending amount of the fluorine-containing copolymer is, for example, 20 parts by mass or more, preferably 30 parts by mass or more, or more preferably 40 parts by mass or more, and usually 50 parts by mass or less, per 100 parts by mass of the solid content of the coating composition.

The polyisocyanate curing agent is blended at an equivalent ratio (NCO/OH) of about 1 (equivalent mass) of the isocyanate group of the polyisocyanate curing agent to the hydroxyl group of the fluorine-containing copolymer, and more specifically, the blended amount thereof is in the range of, for example, 1 to 100 parts by mass, or preferably 1 to 50 parts by mass, per 100 parts by mass of the fluorine-containing copolymer. The polyisocyanate curing agent having 1 part by mass or more can provide sufficient solvent resistance and hardness of the coating film, while the polyisocyanate curing agent having 100 parts by mass or less can lead to excellent workability and shock resistance.

The blended amount of the weak solvent is the amount remaining from the amounts of the polyisocyanate curing agent and the fluorine-containing copolymer in the coating composition, and is appropriately determined considering the solubility of the fluorine-containing copolymer, the proper viscosity during coating, the coating method, or the like. Specifically, considering the excellent solubility of the fluorine-containing copolymer in the weak solvent, the amount of the weak solvent is in the range of, for example, 10 to 30% by mass of the total amount of the coating composition.
In the coating composition of the present invention, it is most preferable that the whole solid content therein is dissolved in the weak solvent, but some insoluble portions are allowed.

The coating composition of the present invention is used as a two-component curing type coating material. Specifically, first, a fluorine-containing copolymer is dissolved in a weak solvent to prepare a main component, and a polyisocyanate curing agent is then separately prepared. The main component and the polyisocyanate curing agent are mixed immediately before use, to prepare a coating composition, and the coating composition is applied onto an article to be coated.
In addition to the above components, the coating composition of the present invention can contain other functional compounding agents according to the purpose and application.

As the functional compounding agent, for example, CAB (cellulose acetate butyrate), NC (nitrocellulose) or the like may be contained in order to improve the drying property of the coating film, or a polymer polymerized from an acrylic acid or ester, or polyester can be contained in order to improve the gloss of the coating film, the hardness, and the application performance of the coating material.
Examples of the other functional compounding agent include color pigment, dye, silane coupling agent for improved adhesion of the coating film, ultraviolet absorber, curing accelerator, light stabilizer, and flatting agent.

Examples of the color pigment and dye include inorganic pigments such as carbon black with good weather resistance, and titanium oxide; and organic pigments and dyes such as phthalocyanine blue, phthalocyanine green, quinacridone red, indanthrene orange, and isoindolinone yellow.
Examples of the silane coupling agent include 3-aminopropyltriethoxysilane, 3-aminopropyltrimethoxysilane, N-2-(aminoethyl)-3-aminopropyltrimethoxysilane, ureidopropyltriethoxysilane, vinyltriethoxysilane, vinyltrimetoxysilane, 3-methacryloxypropyltrimethoxysilane, 3-methacryloxypropyl triethoxysilane, 2-(3,4-epoxycyclohexyl) ethyltrimethoxysilane, 3-glycidoxypropyltrimetoxysilane, 3-mercaptopropyltrimethoxysilane, 3-isocyanatopropyltriethoxysilane, methyltriethoxysilane, and methyltrimetoxysilane.

Examples of the ultraviolet absorber include ultraviolet absorbers of benzophenone type, benzotriazol type, triazine type, and cyanoacrylate type.
Examples of the curing accelerator include dibutyltin dilaurate.
Examples of the light stabilizer include a hindered amine light stabilizer, and more specifically, Adeka Stab LA62, Adeka Stab LA67 (trade names, hereinabove manufactured by Adeka Argus Chemical Co., Ltd.), Tinuvin 292, Tinuvin 144, Tinuvin 123, and Tinuvin 440 (trade names, hereinabove manufactured by Ciba Specialty Chemicals Inc.).

Examples of the flatting agent include superfine synthetic silica. When the flatting agent is blended, an elegant coating film having a semi-gloss and flat finish can be formed.
These functional compounding agents are blended with a coating composition in an appropriate blending proportion according to the purpose and application. The functional compounding agent may be preliminarily blended with the above-mentioned main component and/or polyisocyanate curing agent, or can also be blended with the coating composition after blending of the main component and the polyisocyanate curing agent.

The coating composition of the present invention is excellent in solubility in weak solvents, and also has excellent coating properties, such as weather resistance, hardness, and shock resistance. Moreover, the coating composition has excellent workability such as pot life. Accordingly, with the coating composition, a coating film having excellent coating properties can be formed on various articles to be coated which are susceptible to damage by a strong solvent, without damaging them.
The coating composition of the present invention can be coated over the article to be coated by any coating method such as spray coating, air spray coating, brush coating, dip coating, a roll coater method, and a flow coater method, without particular limitation.

The article to be coated is not particularly limited, and examples thereof includes inorganic substances such as concrete, natural stone, and glass; metals such as iron, stainless steel, aluminium, copper, brass, and titanium; and organic substances such as plastic, rubber, adhesive, and wood. In particular, the coating composition is suitable for re-coating of surfaces of already-formed coating films. It is also suitable for coating of a fiber reinforcement plastic (FRP) which is an organic/inorganic composite, a concrete polymer composite, a fiber-reinforced concrete, or the like.

More specifically, the coating composition is suitable for transportation equipments such as an automobile, an electric train, an airplane; civil engineering components such as a bridge component and a steel tower; industrial equipments such as a water-proof sheet, a tank, and a pipe; building components such as an exterior of a building, a door, a window material, a monument, and a pole; road components such as a center divider, a guardrail, and a sound insulating wall; communication equipments; or electric or electronic components.

### EXAMPLES

While in the following, the present invention is described with reference to Examples and Comparative Examples, the present invention is not limited to any of them.
Synthesis Example 1 (Synthesis of Curing Agent A)
A 500-ml four-neck flask equipped with a stirrer, a thermometer, a nitrogen gas inlet tube, and a Dimroth condenser tube was charged with 455.6 g of H₆XDI and 44.4 g of dodecyl alcohol under a nitrogen gas atmosphere, heated to 90°C, and then maintained for 2 hours.

Subsequently, 0.02 g of trimethyl-N-2-hydroxypropyl ammonium 2-ethylhexanoate as a reaction catalyst was added thereto, and the reaction was continued for 2 hours with the reaction temperature being adjusted to 90±5°C. Then, 0.02 g of o-toluenesulfonic amide as a catalyst deactivator was added thereto to deactivate the reaction catalyst, finally stopping the reaction.
Unreacted H₆XDI was removed from the resulting reaction solution, thereby obtaining 201.1 g of a pale yellow, transparent polyisocyanate curing agent A (conversion: 40%).

The polyisocyanate curing agent A had an allophanate/isocyanurate composition ratio of 72/28, an isocyanate content of 16.2%, a viscosity (viscosity measured by a BL type viscometer) of 28000 mPa·s, and a content of unreacted H₆XDI of 0.5% by mass. As a result of NMR measurement, a urethane bond was not substantially observed.
A solution obtained by diluting the polyisocyanate curing agent A with a mineral spirit A (manufactured by Nippon Oil Corp.) so as to have a solid content of 90% by mass had a viscosity at 25°C of 1600 mPa·s, and was maintained in its uniformly transparent state without becoming cloudy at 0°C.

Synthesis Example 2 (Synthesis of Curing Agent B)
A polyisocyanate curing agent B was obtained in the same manner as in Synthesis Example 1, except that n-decyl alcohol was used as the monoalcohol in place of the dodecyl alcohol.
The polyisocyanate curing agent B had an allophanate/isocyanurate composition ratio of 71/29, an isocyanate content of 17.0%, a viscosity (viscosity measured by a BL type viscometer) of 26000 mPa·s, and a content of unreacted H₆XDI of 0.5% by mass. As a result of NMR measurement, a urethane bond was not substantially observed.

Synthesis Example 3 (Synthesis of Curing Agent C)
A polyisocyanate curing agent C was obtained in the same manner as in Synthesis Example 1, except that n-hexadecyl alcohol was used as the monoalcohol in place of the dodecyl alcohol.
The polyisocyanate curing agent C had an allophanate/isocyanurate composition ratio of 73/27, an isocyanate content of 14.8%, a viscosity (viscosity measured by a BL type viscometer) of 30000 mPa·s, and a content of unreacted H₆XDI of 0. 5% by mass. As a result of NMR measurement, a urethane bond was not substantially observed.

Synthesis Example 4 (Synthesis of Curing Agent D)
A polyisocyanate curing agent D was obtained in the same manner as in Synthesis Example 1, except that the heating temperature was changed from 90°C to 100°C.
The polyisocyanate curing agent D had an allophanate/isocyanurate composition ratio of 95/5, an isocyanate content of 13.9%, a viscosity (viscosity measured by a BL type viscometer) of 4800 mPa·s, and a content of unreacted H₆XDI of 0.5% by mass. As a result of NMR measurement, a urethane bond was not substantially observed.

Synthesis Example 5 (Synthesis of Curing Agent E)
A 500-ml four-neck flask equipped with a stirrer, a thermometer, a nitrogen gas inlet tube, and a Dimroth condenser tube was charged with the curing agent A and Diol-700 (polyoxypropylene diol having a number average molecular weight of 700, manufactured by Mitsui Chemicals Polyurethanes, Inc.) at a weight ratio of 90/10 under a nitrogen gas atmosphere, heated to 80°C, and then maintained for 6 hours, to thereby obtain a polyisocyanate curing agent E.

The polyisocyanate curing agent E had an allophanate/isocyanurate composition ratio of 64/36, an isocyanate content of 13.4%, a viscosity (viscosity measured by a BL type viscometer) of 32000 mPa·s, and a content of unreacted H₆XDI of 0.5% by mass. As a result of NMR measurement, a urethane bond was observed.
Synthesis Example 6 (Synthesis of Curing Agent F)
A 500-ml four-neck flask equipped with a stirrer, a thermometer, a nitrogen gas inlet tube, and a Dimroth condenser tube was charged with the curing agent A and Diol-400 (polyoxypropylene diol having a number average molecular weight of 400, manufactured by Mitsui Chemicals Polyurethanes, Inc.) at a weight ratio of 90/10 under a nitrogen gas atmosphere, heated to 80°C, and then maintained for 6 hours, to thereby obtain a polyisocyanate curing agent F.

The polyisocyanate curing agent F had an allophanate/isocyanurate composition ratio of 64/36, an isocyanate content of 14.0%, a viscosity (viscosity measured by a BL type viscometer) of 25000 mPa·s, and a content of unreacted H₆XDI of 0.5% by mass. As a result of NMR measurement, a urethane bond was observed.
Synthesis Example 7 (Synthesis of Curing Agent G)
A polyisocyanate curing agent G was obtained in the same manner as in Synthesis Example 1, except that the heating temperature was changed from 90°C to 60°C.

The polyisocyanate curing agent G had an allophanate/isocyanurate composition ratio of 10/90, an isocyanate content of 20.9%, and a content of unreacted H₆XDI of 0.5% by mass.
As a result of NMR measurement, a urethane bond was not substantially observed.
Synthesis Example 8 (Synthesis of Curing Agent H)
A polyisocyanate curing agent H was obtained in the same manner as in Synthesis Example 1, except that HDI was used as the polyisocyanate in place of the H₆XDI.

The polyisocyanate curing agent H had an allophanate/isocyanurate composition ratio of 72/28, an isocyanate content of 17.9%, a viscosity (viscosity measured by a BL type viscometer) of 400 mPa·s, and a content of unreacted HDI of 0.5% by mass. As a result of NMR measurement, a urethane bond was not substantially observed.
Synthesis Example 9 (Synthesis of Curing Agent I)
A polyisocyanate curing agent I was obtained in the same manner as in Synthesis Example 1, except that HDI was used as the polyisocyanate in place of the H₆XDI, and 2-ethylhexyl alcohol was used as the monoalcohol in place of the dodecyl alcohol.

The polyisocyanate curing agent I had an allophanate/isocyanurate composition ratio of 60/40, an isocyanate content of 20.0%, a viscosity (viscosity measured by a BL type viscometer) of 200 mPa·s, and a content of unreacted HDI of 0.5% by mass. As a result of NMR measurement, a urethane bond was not substantially observed.
Synthesis Example 10 (Synthesis of Curing Agent J)
A polyisocyanate curing agent J was obtained in the same manner as in Synthesis Example 1, except that IPDI was used as the polyisocyanate in place of the H₆XDI, and isobutyl alcohol was used as the monoalcohol in place of the dodecyl alcohol.

The polyisocyanate curing agent J had an allophanate/isocyanurate composition ratio of 73/27, an isocyanate content of 14.8%, and a content of unreacted IPDI of 0.5% by mass. As a result of NMR measurement, a urethane bond was not substantially observed.
Synthesis Example 11 (Synthesis of Curing Agent K)
A polyisocyanate curing agent K was obtained in the same manner as in Synthesis Example 1, except that isobutyl alcohol was used as the monoalcohol in place of the dodecyl alcohol.

The polyisocyanate curing agent K had an allophanate/isocyanurate composition ratio of 81/19, an isocyanate content of 20.2%, a viscosity (viscosity measured by a BL type viscometer) of 20000 mPa·s, and a content of unreacted H₆XDI of 0.5% by mass. As a result of NMR measurement, a urethane bond was not substantially observed.
Synthesis Example 12 (Synthesis of Curing Agent L)
A 500-ml four-neck flask equipped with a stirrer, a thermometer, a nitrogen gas inlet tube, and a Dimroth condenser tube was charged with the curing agent K and Diol-700 (polyoxypropylene diol having a number average molecular weight of 700, manufactured by Mitsui Chemicals Polyurethanes, Inc.) at a weight ratio of 90/10 under a nitrogen gas atmosphere, heated to 80°C, and then maintained for 6 hours, to thereby obtain a polyisocyanate curing agent L.

The polyisocyanate curing agent L had an allophanate/isocyanurate composition ratio of 73/27, an isocyanate content of 17.0%, a viscosity (viscosity measured by a BL type viscometer) of 26000 mPa·s, and a content of unreacted H₆XDI of 0.5% by mass. As a result of NMR measurement, a urethane bond was observed.
Preparation Example 1 (Preparation of Main Component)
Blended were 41.5 g of LUMIFLON LF800 (mineral spirit-soluble fluorine-containing copolymer, manufactured by Asahi Glass Company), 100 g of D-918 (white pigment, Sakai Chemical Industry Co., Ltd.), and 108.5 g of a mineral spirit A, and the blended mixture was forcibly stirred in a bead mill for 2 hours, to thereby obtain 250 g of a mill base.

Subsequently, 250 g of the mill base thus obtained and 342. 9 g of LUMIFLON LF800 were mixed, and thereafter, the mineral spirit A was added thereto so as to have a resin solid content of 35% by mass, to thereby prepare a main component.
Examples 1 to 6 and Comparative Examples 1 to 6 (Preparation of Coating Composition and Formation of Coating Film)
The coating composition in each of Examples and Comparative Examples shown in Table 1 was prepared in the following manner. Each of polyisocyanate curing agents A to L was blended with 100 parts by mass of the main component so that the equivalent ratio of the isocyanate group of the curing agent to the hydroxyl group of the main component was 1/1, the blended mixture was diluted with a mineral spirit A so as to have a nonvolatile content (solid content) of 50% by mass, and 0.01 parts by mass of dibutyltin dilaurate was then added thereto as a curing accelerator, to thereby prepare a coating composition.

Each of the coating compositions was applied onto a surface of a chromate-treated aluminum plate so as to have a film thickness of 25 µm, to form a coating film, and all the coating films were aged in a thermostatic chamber at 23°C for 1 week.

**[Table 1]**

| Ex. /Comp. Ex | | Ex. | | | | | | Comp. Ex. | | | | | |
|---|---|---|---|---|---|---|---|---|---|---|---|---|---|
| | | 1 | 2 | 3 | 4 | 5 | 6 | 1 | 2 | 3 | 4 | 5 | 6 |
| Curing Agent | | A | B | C | D | E | F | G | H | I | J | K | L |
| Polyisocyanate | | H6XDI | H6XDI | H6XDI | H6XDI | H6XDI | H6XDI | H6XDI | HDI | HDI | IPDI | H6XDI | H6XDI |
| No. of Carbon Atoms in Monoalcohol | | 12 | 10 | 16 | 12 | 12 | 12 | 12 | 12 | 8 | 4 | 4 | 4 |
| Polyol | | - | - | - | - | Diol 700 | Diol 400 | - | - | - | - | - | Diol 700 |
| Allophanate/Isocyanurate Composition Ratio | | 72/28 | 71/29 | 73/27 | 95/5 | 64/36 | 64/36 | 10/90 | 72/28 | 60/40 | 73/27 | 81/19 | 73/27 |
| Dilution (%) | | 520 | 200 | 350 | >1000 | 150 | 250 | <5 | 90 | 50 | 140 | 10 | 5 |
| Pot Life (min) | | 7 | 6 | 6 | 8.5 | 7 | 7 | 6 | 4 | 8 | 9.5 | 6 | 7 |
| Coating Hardness | | H | H | H | H | H | H | 2H | H | H | B | H | H |
| Shock Resistance (cm) | Upper | 100 | 100 | 100 | 100 | 100 | 100 | 50 | 100 | 100 | 60 | 80 | 100 |
| | Lower | 100 | 100 | 100 | 100 | 100 | 100 | 50 | 100 | 100 | 80 | 95 | 100 |
| Erichsen (mm) | | 6 | 7 | 7 | 7 | 7 | 6 | 6 | 7 | 7 | 7 | 6 | 6 |

In table 1, the allophanate/isocyanyurate composition ratio was determined in the following manner. The molecular weight distribution of each of the polyisocyanate curing agents was measured with a GPC apparatus shown below, the area ration of the peak corresponding to the allophanate to all the peaks was determined as an allophanate composition ratio while the area ratio of the remaining peaks to all the peaks was determined as an isocyanurate composition ratio, and the allophanate/isocyanurate composition ratio was then calculated.
GPC System:
Apparatus Used: Alliance (manufactured by Waters Corporation)
Column Used: PLgel Guard + 5 µm MIXED-C x 3 (50 x 7.5 mm, 300 x 7.5 mm: manufactured by Polymer Laboratories)
Mobile Phase Composition: THF (tetrahydrofuran)
Flow Rate and Pressure: 1.0 ml/min, 1400 psi (on average), at constant flow rate
Column Temperature: 40°C
Refractive Index Detector: 2410 RI detector (manufactured by Waters Corporation)
Sample Injection Volume: 100 µl
Sample Concentration: 1.0 wt%

### Evaluation

### 1) Dilution

At 0°C, 100 g of each of the polyisocyanate curing agents A to L obtained above was diluted with a mineral spirit A (manufactured by Nippon Oil Corp.) until the polyisocyanate curing agent became cloudy, and the dilution amount Y (g) of the mineral spirit A at the time when the polyisocyanate curing agent turned cloudy was set to dilution (%). The results are shown in Table 1.

At the beginning, each of the polyisocyanate curing agents was completely dissolved in the mineral spirit A. However, as the dilution amount of the mineral spirit A increased, the polyisocyanate curing agent became cloudy again.

### 2) Coating Properties

### 2-1) Pot life

A period of time from when the coating composition was prepared to when the coating composition had a viscosity of 450 mPa·s in viscosity measurement with an E type viscometer at 25°C was set to pot life time (minute). The results are shown in Table 1.

### 2-2) Coating Hardness (Scratch Hardness)

In accordance with JIS-K5600-5-6 (2002), the pencil hardness at the time when a surface of the coating film was scratched was evaluated as coating hardness. The results are shown in Table 1. 2-3) Shock Resistance

In accordance with JIS K 5600-5-6 (2002), a 1/4-inch diameter center punch was applied to (upper/lower) surfaces of the coating film, and a 500 g heavy weight is caused to fall down onto the coating film. The weight falling height (cm) at the time when the coating film was broken was then evaluated as shock resistance (upper/lower) (cm). The results are shown in Table 1.

### 2-4) Erichsen

In accordance with JIS K 5600-5-6 (2002), a 1/4-inch diameter center punch was applied to the (lower) surface of the coating film, the circumference of the coated plate was firmly fixed, and the punch was stretched against the coated plate at a predetermined speed. The stretched length (mm) at the time when the surface of the coating film was cracked was evaluated as Erichsen (mm). The results are shown in Table 1.

Accordingly, it is appreciated from the above results that the polyisocyanate curing agent using H₆XDI as a polyisocyanate exhibits excellent dilution, and in particular, the polyisocyanate curing agent using H₆XDI and monoalcohols having 10, 12, and 16 carbon atoms maintains excellent dilution with good coating properties such as hardness. On the other hand, it is appreciated that using monoalcohols having less than 10 carbon atoms, the dilution deteriorates dramatically.

It is also appreciated from the above results that the polyisocyanate curing agent using HDI has poor dilution although having good hardness, shock resistance, and Erichsen.
As for the allophanate/isocyanurate composition ratio, it is further appreciated from the above results that the coating film having an allophanate composition ratio exceeding 90% has a dilution exceeding 1000% without lowering the hardness.

While the illustrative embodiments of the present invention are provided in the above description, such is for illustrative purpose only and it is not to be construed restrictively. Modification and variation of the present invention that will be obvious to those skilled in the art is to be covered by the following claims.

### INDUSTRIAL APPLICABILITY

The coating composition of the present invention is suitable for, for example, inorganic substances such as concrete, natural stone, and glass; metals such as iron, stainless steel, aluminium, copper, brass, and titanium; and organic substances such as plastic, rubber, adhesive, and wood. In particular, the coating composition is suitable for re-coating of surfaces of already-formed coating films.

## Claims

1. A coating composition comprising:
a polyisocyanate curing agent obtained by a reaction between an alicyclic polyisocyanate and a monoalcohol having at least 10 to 50 carbon atoms;
a weak solvent-soluble fluorine-containing copolymer being a copolymer of a fluoroolefin and a double bond-containing monomer copolymerizable with the fluoroolefin, and having a fluorine content derived from the fluoroolefin of 10% by mass or more, wherein 5 to 30% by mol of the double bond-containing monomer comprises a hydroxyl group while 10 to 50% by mol of the double bond-containing monomer comprises a branched alkyl group having 3 or more carbon atoms; and
a weak solvent.

2. The coating composition according to claim 1, wherein the polyisocyanate curing agent has an allophanate/isocyanurate composition ratio in a range of 50/50 to 100/0.

3. The coating composition according to claim 1 or 2, wherein the dilution of the polyisocyanate curing agent in a mineral spirit is 150% or more.

4. The coating composition according to any one of claims 1 to 3, wherein the alicyclic polyisocyanate is 1,3-bis(isocyanatomethyl)cyclohexane.
